(19) Europäisches Patentamt
European Patent Office
Office européen des brevets

(11) Veröffentlichungsnummer: **0 292 826**
**A2**

(12) # EUROPÄISCHE PATENTANMELDUNG

(21) Anmeldenummer: **88107806.7**

(51) Int. Cl.⁴: **C09K 7/02**

(22) Anmeldetag: **16.05.88**

(30) Priorität: **26.05.87 DE 3717640**

(43) Veröffentlichungstag der Anmeldung: **30.11.88 Patentblatt 88/48**

(84) Benannte Vertragsstaaten: **DE FR GB**

(71) Anmelder: **Wolff Walsrode Aktiengesellschaft
Postfach
D-3030 Walsrode 1(DE)**

(72) Erfinder: **Schriewer, Bernd, Dr.
Holunderweg 10
D-3030 Walsrode(DE)**
Erfinder: **Jörgens, Gerhard
An der Warnau 3
D-3036 Bomlitz(DE)**

(74) Vertreter: **Zobel, Manfred, Dr. et al
c/o BAYER AG Konzernverwaltung RP
Patentabteilung Bayerwerk
D-5090 Leverkusen(DE)**

(54) **Bohrspülungssystem.**

(57) Verbesserte Bohrspülungssysteme, enthaltend

1. einen mineralischen Feststoff, der abdichtende Funktion hat und in Wasser bei pH >6 nicht löslich aber dispergierbar ist,
2. ein flexibles, Zwischenräume abdichtendes Material,
3. einen Viskositätsbildner bzw. ein Dispergierhilfsmittel.

EP 0 292 826 A2

## Bohrspülungssystem

Die Erfindung betrifft neue Bohrspülungssysteme, insbesondere mit niedrigem Feststoffgehalt bzw. mit Feststoffen die wieder entfernt werden können.

Beim Abteufen von Tiefbohrungen im Trägerbereich kommt es unter anderem darauf an, daß in der Formation die Fließwege für das Erdöl bez. Erdgas durch die verwendete Bohrspülung nicht irreversibel verstopft werden. Bei nichtgeeigneten Spülungssystemen kann die Ergiebigkeit der Erdöl- oder Erdgas-Lagerstätte stark beeinträchtigt werden. Um die Ergiebigkeit dieser Lagerstätten dann wieder zu erhöhen, sind kostspielige Maßnahmen, wie z.B. Fracen, durchzuführen. Häufig führen auch solche Maßnahmen nur zu einem bedingten Erfolg. Die Auswahl und die Formulierung der Bohrspülung ist daher in diesem Abschnitt der Bohrmaßnahme von besonderer Bedeutung. Normale Bohrspülungssysteme enthalten neben Additiven zur Reduzierung des Wasserverlustes, Viskositätsbildnern und Beschwerungsmitteln eine relativ hohe Konzentration an Ton. Dieser Ton ist in der Bohrspülung gut dispergiert und neigt dazu, speziell während der Ausbildung des abdichtenden Filterkuchens in die Formation einzudringen. Tonpartikel sind nur sehr schwer entfernbar, da sie, z.B. auch durch Säuern, nicht zersetzt oder gelöst werden können. Sie führen daher häufig zu einer permanenten Verstopfung der Fließwege. So können konventionelle Spülungssysteme selbst bei guten Eigenschaften bezüglich des Wasserverlustes die Trägerformation nachhaltig -schädigen und somit die Ergiebigkeit der Lagerstätte herabsetzen (G. V. Chilingarian, P. Vorabutr: Developments in Petroleum Sci. 11, Flievier Scientific Publishing Comp., Amsterdam, 1981, Drilling and Drilling Fluids).

Bestehende technische Lösungen bezüglich Spülungssysteme ohne Ton als Filterkuchen-bildendes Material haben entweder zu hohe Werte für den Wasserverlust (laut Norm des American Petroleum Institut, API-No. RP 13 B) oder nicht geeignete rheologische Eigenschaften. Die scheinbare Viskosität bei niedrigen Wasserverlustwerten liegt dann nicht im gewünschten Bereich von 20 -60 mPa.s, (GB-A-2 110 699, GB-A-1 591 313, US-A-4 473 479, GB-A-2 074 637, US-A-3 852 201). Häufig enthalten diese Systeme auch Materialien, die schlecht löslich sind und wiederum zu Verstopfungen der Formation neigen, z.B. $BaSO_4$ -(GB-A-2 148 354).

Aufgabe der vorliegenden Erfindung war es deshalb, verbesserte Bohrspülungssysteme zu entwickeln.

Gegenstand der Erfindung ist ein neues Bohrspülungssystem, enthaltend

1. einen mineralischen Feststoff, der abdichtende Funktion hat, in Wasser bei pH >6 nicht löslich aber dispergierbar ist,
2. ein flexibles, Zwischenräume abdichtendes Material und
3. einen Viskositätsbildner bzw. ein Dispergierhilfsmittel.

In einer bevorzugten Ausführungsform ist das Bohrspülungssystem tonfrei. Der mineralische Feststoff 1.) ist vorzugsweise Kalziumcarbonat, insbesondere Kreide.

Der mineralische Feststoff ist bei pH >6 in Wasser an sich nicht löslich, kann aber durch geeignete Maßnahmen, z.B. durch Säure, durch Zugabe von Lösungsmitteln oder Komplexierungsmitteln oder auf andere Art gelöst werden.

Das flexible abdichtende Material 2.) ist bevorzugt ein vernetztes Polymer, insbesondere aus Polyacrylnitril. Besonders bevorzugte derartige Polymere sind mit Waser quellbare hochmolekulare Substanzen, hergestellt durch Umsetzung von wasserlöslichen Hydrolyseprodukten von Polyacrylnitrilpolymerisaten mit wenigstens 30 Gew.-% Acrylsäureeinheiten, die bis zu 100 % als Ammoniumsalze, Alkali- und/oder Erdalkalimetallsalze vorliegen können, in einer 5 bis 65 gew.-%igen wäßrigen Lösung mit 0,3 bis 10 Gew.-%, bezogen auf das Polymerisat eines Vernetzungsmittels, hergestellt durch Umsetzung von Aziridin und/oder Methylaziridin mit einem mindestens bifunktionellen Veresterungsprodukt aus einem mindestens zweiwertigen Alkohol mit Acryl- und/oder Methacrylsäure, wobei die Umsetzung des Polymerisats mit dem Vernetzungsmittel bei Temperaturen von 0 bis 100°C im pH-Bereich von 3 bis 8 durchgeführt wird.

Besonders bevorzugte derartige Polymere sind die aus der EP-A-0 150 302 bekannten Polymere.

Besonders bevorzugte Viskositätsbildner bzw. Dispergiermittel haben in einer 2 %igen Lösung eine Viskosität in einem Bereich von 20000 bis 35000 mPa.s. Hierbei handelt es sich vorzugsweise um polyanionische Cellulose, insbesondere Carboxymethylcellulose. Eine besonders bevorzugte Carboxymethylcellulose ist gekennzeichnet durch einen ausreichend hohen Substitutionsgrad von 0,9, ein ausreichend hohes Molekulargewicht um die obige Viskosität erreichen zu können und eine gleichmäßige Verteilung der Substituenten.

Gegenstand der Erfindung ist weiterhin ein Verfahren zur Durchführung von Bohrungen unter Verwendung eines erfindungsgemäßen Bohrspülungssystems.

Üblicherweise werden zur Formulierung der wäßrigen Bohrspülungen die erfindungsgemäßen Polymerisate in Konzentrationen von 0,5 bis 50 kg/m³, vorzugsweise 3 bis 30 kg/m³, eingesetzt. Den wäßrigen Bohrspülungen werden zur Viskositätserhöhung und Abdichtung durchbohrter For mationen vorwiegend Bentonite und zur Dichteerhöhung der Bohrschlämme Schwertspat, Kreide und Eisenoxide zugesetzt.

Je nach den zu durchbohrenden Formationen können Bentonit, Schwertspat, Kreide und Eisenoxid allein oder in verschiedensten Mischungsverhältnissen den Bohrspülungen zugegeben werden.

Das Verhältnis der einzelnen Produkte zueinander wird vorzugsweise so abgestimmt, daß die gewünschten Eigenschaften der Bohrspülung bezüglich des Wassersverlustes und der rheologischen Eigenschaften erreicht wurden.

Der Wert für den API-Wasserverlust soll entsprechend den jeweiligen Erfordernissen der Formation ausreichend gering sein. Hierbei wurden die Meßwerte nach 15 Stunden Temperaturbelastung bei 85 °C betrachtet.

Es wurden in einem gesättigten Salzwassersystem Werte knapp unter 4 ml, in einem Seewassersystem Werte von 5 bis 6 ml und im Süßwasser Werte zwischen 8 und 9 ml erreicht (Tabelle 1).

Die erfindungsgemäßen Bohrspülungssystem weisen gute Hochdruck/Hochtemperatur-Preßwasserwerte auf (siehe Beispiel 2) und sind gegenüber Kaliumchlorid und Natriumcarbonat stabil (Beispiel 3).

Mit den erfindungsgemäßen Bohrspülungssystemen können Fließgrenzen (YP) gemäß API-Vorschrift 13 B erreicht werden. Diese Größe sollte einen Meßwert von 25 lbs/100 sqft nicht wesentlich überschreiten.

Die erfindungsgemäß zu verwendenden Komponenten werden vorzugsweise in den Bohrspülungssystemen mit folgenden Gewichtsteilen eingesetzt:

1. Mineralischer Feststoff 1.):
von 5 bis 80 Gew.-Teilen
2. Flexibles abdichtendes Material 2.):
von 0,25 bis 0,75 Gew.-Teilen
3. Viskositätsbildner bzw. Dispergierhilfsmittel 3.):
von 0,25 bis 0,75 Gew.-Teilen.

Beispiel 1

Tonfreie Bohrspülungssysteme gemäß den folgenden Proben 1 bis 9 der Tabelle 1 wurden zusammengestellt und weisen die in der Tabelle 1 angegebenen Werte auf. Hierbei wurde durch Zusatz von NaCl Seewasser simuliert.

Wie aus Tabelle 1 hervorgeht, werden in einem gesättigten Salzwassersystem für den API-Wasserverlust Werte von knapp unter 4 ml im bevorzugten Konzentrationsbereich, in einem Seewassersystem Werte von 5 bis 6 ml und für Süßwasser Werte zwischen 8 und 9 ml erreicht.

Tabelle 1

**Tonfreie Spülungssysteme**

| Spülungszusammensetzung: | Probe Nr. | 1 | 2 | 3 | 4 | 5 | 6 | 7 | 8 | 9 |
|---|---|---|---|---|---|---|---|---|---|---|
| Wasser | (g) | 400 | 400 | 400 | 400 | 400 | 400 | 400 | 400 | 400 |
| Carboxymethylcellulose, Viskosität: | (g) | 3 | 2 | 1 | 3 | 2 | 1 | 3 | 2 | 1 |
| Na-Salz eines vernetzten Polyacrylnitrilhydrolysats | (g) | 1 | 2 | 3 | 1 | 2 | 3 | 1 | 2 | 3 |
| NaCl | (g) | | | | 16 | 16 | 16 | 120 | 120 | 120 |
| Kreide | (g) | 40 | 40 | 40 | 40 | 40 | 40 | 40 | 40 | 40 |
| Meßwerte nach 15 Stunden Belastung bei 85° C: | | | | | | | | | | |
| Scheinbare Viskosität (gemäß API-Norm 13 B) | mPa.s | 68 | 51 | 29 | 52 | 30 | 14 | 58,5 | 33 | 15 |
| Plastische Viskosität (gemäß API-Norm 13 B) | mPa.s | 38 | 33 | 22 | 34 | 21 | 13 | 32 | 23 | 12 |
| Fließgrenze (gemäß API-Norm 13 B) | lbs/100 sqft | 60 | 36 | 14 | 36 | 18 | 2 | 53 | 20 | 6 |
| API-Wasserverlust (gemäß API-Norm 13 B) | ml | 8,5 | 8,8 | 9 | 6,2 | 5,8 | 5,9 | 3,7 | 3,7 | 7,5 |

Bei dem Natriumsalz des vernetzten Polyacrylnitrilhydrolysats handelt es sich um das aus der EP-A-0 150 302 bekannte Hydrolysat gemäß Beispiel 1.

Beispiel 2

Bohrspülungssysteme werden gemäß folgender Tabelle 2 zusammengesetzt und zeigen bei 35 bar/85 °C die in Tabelle 2 angegebenen Wasserverluste. Hieraus ergibt sich eine verbesserte Wirkung bei Erhöhung der Konzentration der Kreide, speziell auch der Wasserverluste bei erhöhten Temperaturen und Drücken.

Tabelle 2

Tonfreie Spülungssysteme

| Spülungszusammensetzung: | Probe Nr. | 1 | 2 | 3 | 4 |
|---|---|---|---|---|---|
| Wasser | (g) | 400 | 400 | 400 | 400 |
| Carboxymethylcellulose gemäß Beispiel 1 | (g) | 1,67 | 1,33 | 1,67 | 3,33 |
| Na-Salz eines vernetzten Polyacrylnitrilhydrolysats (gemäß EP-A-0 150 302) | (g) | 3,33 | 1,67 | 3,33 | 1,67 |
| NaCl | (g) | 120 | 120 | 120 | 120 |
| Kreide | (g) | 20 | 20 | 100 | 100 |
| Meßwerte nach 15 Stunden Belastung bei 85° C: | | | | | |
| Scheinbare Viskosität (gemäß API-Norm 13 B) | mPa.s | 24 | 54 | 26,5 | 63 |
| Plastische Viskosität (gemäß API-Norm 13 B) | mPa.s | 17 | 23 | 20 | 35 |
| Fließgrenze (gemäß API-Norm 13 B) | lbs/100 sqft | 14 | 62 | 13 | 56 |
| API-Wasserverlust (gemäß API-Norm 13 B) | ml | 4,8 | 4,8 | 5,7 | 3,8 |
| Wasserverlust bei 85° C; 35 bar | | 22 | 20 | 20 | 16 |

Beispiel 3

Es wurden die in Tabelle 3 angegebenen Bohrspülungssysteme hergestellt. Aus den angegebenen Daten ergibt sich, daß diese gegenüber dem Einsatz von Kaliumchlorid zur Toninhibierung und Natriumcarbonat (pH-Kontrolle) stabil sind.

Tabelle 3

Tonfreie Spülungssysteme

Belastung bei 85° C

| Spülungszusammensetzung: | Probe Nr. | 1 | 2 |
|---|---|---|---|
| Wasser | (g) | 400 | 400 |
| Carboxymethylcellulose gemäß Beispiel 1 | (g) | 2 | 2 |
| Na-Salz eines vernetzten Polyacrylnitrilhydrolysats gemäß Beispiel 1 | (g) | 2 | 2 |
| NaCl | (g) | 120 | 16 |
| KCl | (g) | 40 | 40 |
| Soda | (g) | 8 | |
| Kreide | (g) | 40 | 40 |

Meßwerte nach 15 Stunden Belastung bei 85° C:

| | | 1 | 2 |
|---|---|---|---|
| Scheinbare Viskosität (gemäß API-Norm 13 B) | mPa.s | 32 | 21 |
| Plastische Viskosität (gemäß API-Norm 13 B) | mPa.s | 21 | 6 |
| Fließgrenze (gemäß API-Norm 13 B) | lbs/100 sqft | 22 | 10 |
| API-Wasserverlust (gemäß API-Norm 13 B) | ml | 4,9 | 6,3 |

## Ansprüche

1. Bohrspülungssystem enthaltend
   1. einen mineralischen Feststoff, der abdichtende Funktion hat, in Wasser bei pH >6 nicht löslich aber dispergierbar ist,
   2. ein flexibles, Zwischenräume abdichtendes Material,
   3. einen Viskositätsbildner bzw. ein Dispergierhilfsmittel.
2. Bohrspülungssystem nach Anspruch 1, dadurch gekennzeichnet, daß der mineralische Feststoff in Säure löslich ist.
3. Bohrspülungssystem nach wenigstens einem der vorhergehenden Ansprüche, dadurch gekennzeichnet, daß es keinen Ton enthält.
4. Bohrspülsystem nach wenigstens einem der vorhergehenden Ansprüche, dadurch gekennzeichnet, daß der mineralische Feststoff 1.) Kalziumcarbonat, insbesondere Kreide ist.

5. Bohrspülungssystem nach wenigstens einem der vorhergehenden Ansprüche, dadurch gekennzeichnet, daß das flexible Zwischenräume abdichtende Material 2.) ein vernetztes Polymer ist.

6. Bohrspülungssystem nach wenigstens einem der vorhergehenden Ansprüche, dadurch gekennzeichnet, daß das flexible abdichtende Material 2.) Hydrolyseprodukte von Polyacrylnitrilpolymerisaten enthält.

7. Bohrspülungssystem nach wenigstens einem der vorhergehenden Ansprüche, dadurch gekennzeichnet, daß als Dispergierhilfsmittel polyanionische Cellulose verwendet wird.

8. Bohrspülungssystem nach wenigstens einem der vorhergehenden Ansprüche, dadurch gekennzeichnet, daß als Dispergierhilfsmittel Carboxymethylcellulose verwendet wird.

9. Bohrspülungssystem nach wenigstens einem der vorhergehenden Ansprüche, dadurch gekennzeichnet, daß in Gewichtsteilen enthalten sind:
mineralischer Feststoff 1.): 5 - 80
abdichtendes Material 2.): 0,25 - 0,75
Viskositätsbildner bzw. Dispergierhilfsmittel 3.):0,25-0,75.

10. Verfahren zur Durchführung von Bohrspülungen, dadurch gekennzeichnet, daß ein Bohrspülungssystem gemäß wenigstens einem der vorhergehenden Ansprüche verwendet wird.